# EUROPÄISCHE PATENTSCHRIFT

(11) **EP 3 924 688 B1**
(45) Veröffentlichungstag und Bekanntmachung des Hinweises auf die Patenterteilung: **16.08.2023**
(21) Anmeldenummer: 20703935.5
(22) Anmeldetag: 29.01.2020
(51) Int. Cl.: G01B 11/02, B61B 3/00, B61K 1/02

(54) **ANLAGE UND VERFAHREN ZUM BETREIBEN EINER ANLAGE MIT AUF EINER VERFAHREBENE VERFAHRBAREM MOBILTEIL**
APPARATUS AND METHOD FOR OPERATING AN APPARATUS HAVING A MOBILE PART MOVABLE ON A MOVEMENT PLANE
INSTALLATION ET PROCÉDÉ POUR FAIRE FONCTIONNER CETTE INSTALLATION COMPRENANT UNE PARTIE MOBILE POUVANT ÊTRE DÉPLACÉE SUR UN PLAN DE DÉPLACEMENT

(30) Priorität: 12.02.2019 DE 102019000982
(43) Veröffentlichungstag der Anmeldung: 22.12.2021
(73) Patentinhaber: SEW-EURODRIVE GmbH & Co. KG, 76646 Bruchsal (DE)
(72) Erfinder: EPP, Mario, 69245 Bammental (DE)
(86) Internationale Anmeldenummer: PCT/EP2020/025037
(87) Internationale Veröffentlichungsnummer: WO 2020/164797

(56) Entgegenhaltungen:
- EP-A1- 2 511 656
- JP-A- H04 282 411
- JP-A- 2009 214 986
- KR-A- 20100 085 368

## Beschreibung

Die Erfindung betrifft eine Anlage **und** ein Verfahren zum Betreiben einer Anlage mit auf einer Verfahrebene verfahrbarem **Mobilteil.**

Es ist allgemein bekannt, dass ein Mobilteil auf einer Verfahrebene verfahrbar ist.

**Aus der** WO 2009/068 437 A1 **ist ein Verfahren zur Messung einer Auslenkung eines Hohlbauteils einer Windenergieanlage aus einer Normalposition bekannt.**

**Aus der** DE 10 2009 031 452 A1 **ist ein Verfahren zur Kontrolle der Durchbiegung von Tragwerken mittels eines Lasers bekannt.**

**Aus der** JP 2009-214986 A **als nächstliegneder Stand der Technik eine Anlage mit verfahrbarer Fördereinheit bekannt.**

**Aus der** KR 10-2010-0085368 A **ist eine Krananlage bekannt.**

**Aus der** JP 4-282411 A **ist ein Messverfahren für einen Luftabschnitt in einem Tunnel bekannt.**

**Aus der** EP 2 511 656 A1 **ist ein Vermessungssystem zur Bestimmung von 3D-Koordinaten einer Objektoberfläche bekannt.**

Der Erfindung liegt daher die Aufgabe zugrunde, eine Anlage mit höherer Effizienz weiterzubilden.

Erfindungsgemäß wird die Aufgabe bei der Anlage nach den in Anspruch 1 **und** bei dem Verfahren nach den in Anspruch 10 **angegebenen Merkmalen gelöst.**

Wichtige Merkmale der Erfindung bei der Anlage sind, dass die Anlage mit auf einer Verfahrebene verfahrbarem Mobilteil ausgeführt ist, welches eine Messeinheit aufweist, und einem Messkörper, welcher beabstandet ist von der Verfahrebene und von der zur Verfahrebene parallelen Ebene, welche die Messeinheit enthält insbesondere und möglichst weit entfernt von der Verfahrebene angeordnet ist,
wobei die Messeinheit derart ausgeführt ist, dass sie den Abstand zwischen Messkörper und Messeinheit in Normalenrichtung zur Verfahrebene bestimmt,
wobei der Messkörper derart geformt ist, dass in der auf die Ebene senkrechten Projektion, insbesondere Projektionsfläche, des Messkörpers den oder mehreren insbesondere nicht einander überlappenden Teilflächenbereichen der Projektionsfläche jeweils ein Abstandswert eineindeutig zugeordnet ist.

Von Vorteil ist dabei, dass mittels des Bestimmens eines Abstandes, also einer eindimensionalen Größe, die Abweichung, also eine zweidimensionale Größe, von einer Sollposition bestimmbar ist. Somit ist durch das Messen des Abstandes bekannt, in welcher Richtung die Sollposition erreichbar ist und der Antrieb und die Lenkung des Mobilteils kann in diese Richtung zur Sollposition hinbewegt werden. Auf diese Weise ist ein sehr schnelles Hinregeln auf die Sollposition ausführbar, wobei die Sollposition am Messkörper festgelegt ist. Die Anlage ist somit sehr effizient betreibbar. Beispielsweise ist bei Erreichen der Zielposition eine Last übergebbar oder eine vom Schienenfahrzeug aufgenommene Last von einem auf dem Mobilteil angeordneten Werkzeug bearbeitbar oder alternativ eine vom Mobilteil aufgenommene Last von einem auf dem Schienenfahrzeug angeordneten Werkzeug bearbeitbar.

Bei einer vorteilhaften Ausgestaltung ist der Messkörper an einem Schienenfahrzeug der Anlage angeordnet, welches auf einer Schiene der Anlage verfahrbar ist,
insbesondere wobei das Schienenfahrzeug ein Einschienenhängebahn-Fahrzeug ist. Von Vorteil ist dabei, dass das Mobilteil zum Schienenfahrzeug hin synchronisierbar ist und somit eine Übergabe einer Last während der Fahrt ausführbar ist.

Bei einer vorteilhaften Ausgestaltung sendet die Messeinheit einen Lichtstrahl parallel zur Normalenrichtung zur Verfahrebene aus und bestimmt aus am Messkörper reflektierten Licht den Abstand zwischen der Messeinheit und dem Messkörper in Normalenrichtung. Von Vorteil ist dabei, dass der Abstand entlang des Lichtstrahls bestimmt wird, der vorzugsweise als Laserstrahl ausgeführt wird und somit den Abstand eines quasi punktförmigen Oberflächenbereiches des Messkörpers bestimmbar macht.

Bei einer vorteilhaften Ausgestaltung ist der Messkörper derart geformt, dass der Abstand mit zunehmendem Radialabstand zu einer Sollposition oder zu einem ersten Teilflächenbereich der Projektionsfläche monoton zunimmt, insbesondere nicht aber streng monoton,
insbesondere wobei die radiale Richtung und die Umfangsrichtung bezogen sind auf die durch die Sollposition oder durch den ersten Teilflächenbereich durchgehende Gerade, welche parallel zur Normalenrichtung zur Verfahrebene ist. Von Vorteil ist dabei, dass durch Hinregelung auf kleinere Abstandswerte die optimale Sollposition erreichbar ist.

Bei einer vorteilhaften Ausgestaltung weist der Abstand als Funktion des Radialabstandes und der Umfangsrichtung ein lokales oder absolutes Minimum bei der Sollposition oder bei dem ersten Teilflächenbereich auf. Von Vorteil ist dabei, dass eine besonders einfache Regelung des Mobilteils auf das Minimum hin ermöglicht ist.

Bei einer vorteilhaften Ausgestaltung ist der Messkörper derart geformt, dass in einem jeweiligen Umfangswinkelbereich der Abstand mit zunehmendem Radialabstand zu einer Sollposition oder zu einem ersten Teilflächenbereich der Projektionsfläche gemäß einer jeweiligen Treppenfunktion monoton zunimmt, insbesondere nicht aber streng monoton,
insbesondere wobei die radiale Richtung und die Umfangsrichtung bezogen sind auf die durch die Sollposition oder durch den ersten Teilflächenbereich durchgehende Gerade, welche parallel zur Normalenrichtung zur Verfahrebene ist. Von Vorteil ist dabei, dass durch die Bestimmung des Abstandswertes zwischen der Messeinheit und dem Messkörper eine eindeutige Abweichung von einer Sollposition bestimmbar ist, insbesondere wobei die Abweichung ein ebener Vektor ist.

Bei einer vorteilhaften Ausgestaltung ist die Treppenfunktion eines jeweiligen Umfangswinkelbereichs unterschiedlich zu allen anderen Treppenfunktionen der jeweils anderen Umfangswinkelbereiche,
insbesondere alle Werte der Treppenfunktion eines jeweiligen Umfangswinkelbereichs unterschiedlich sind zu allen Werten aller anderen Treppenfunktionen der jeweils anderen Umfangswinkelbereiche. Von Vorteil ist dabei, dass aus dem von der Messeinheit bestimmten Abstandswert eindeutig auf einen Umfangswinkelwert oder zumindest Umfangswinkelwertebereich sowie Radialabstandswert geschlussfolgert werden kann, also auf eine Abweichung. Somit ist diese Abweichung einem Regler zuführbar, dessen Stellwert dem Antrieb und der Lenkeinheit des Mobilteils zuführbar sind und auf diese Weise das Mobilteil auf eine vorgegebene, auf das Schienenfahrzeug bezogene Solllage hingeregelt wird.

Bei einer vorteilhaften Ausgestaltung ist die radiale Breite der Treppen der Treppenfunktionen aller Umfangswinkelbereiche gleich. Von Vorteil ist dabei, dass insbesondere bei äquidistanten Stufen ein einfaches Hinregeln auf eine mit dem Schienenfahrzeug mitbewegte Sollposition ausführbar ist.

Bei einer vorteilhaften Ausgestaltung ist in Schienenrichtung neben dem Messkörper am Schienenfahrzeug ein Lichtsensor angeordnet, mit welchem das Licht eines auf dem Mobilteil angeordneten Leuchtmittels detektierbar ist. Von Vorteil ist dabei, dass das Schienenfahrzeug überwachen kann, ob das Mobilteil ihm folgt oder ob es verloren ist. Somit muss keine aufwendige Datenübertragung zwischen mobilteil und Schienenfahrzeug installiert werden.

Bei einer vorteilhaften Ausgestaltung ist das Leuchtmittel in einem Rohr angeordnet, so dass das aus dem Rohr austretende Licht einen beleuchteten Bereich, insbesondere Lichtfleck, am Schienenfahrzeug erzeugt. Von Vorteil ist dabei, dass ein gerichteter Lichtstrahl in einfacher Weise erzeugbar ist. Alternativ wäre auch eine Linsenanordnung verwendbar, welche einen wohldefinierten Bereich als beleuchteten Bereich, insbesondere Lichtfleck, am Schienenfahrzeug abbildet.

Bei einer vorteilhaften Ausgestaltung ist die Ausdehnung des Lichtfleckes in Schienenrichtung größer als die Ausdehnung des Messkörpers in Schienenrichtung. Von Vorteil ist dabei, dass überwachbar ist, ob die Synchronisierung des Mobilteils mittels des Messkörpers noch ausführbar ist oder das Mobilteil schon zu weit vom Messkörper sich entfernt hat.

Wichtige Merkmale bei dem Verfahren zum Betreiben einer Anlage sind, dass in einem ersten Schritt, insbesondere bei Inbetriebnahme der Anlage, in einem Speicher des Mobilteils auf den Messkörper bezogenen Abstandswerten als Abweichungswerte ein Umfangswinkel und ein Radialabstand zugeordnet werden,
in einem zweiten Schritt, insbesondere im auf die Inbetriebnahme nachfolgenden Betrieb der Anlage zeitlich wiederkehrend der Abstand zwischen der Messeinheit und dem Messkörper bestimmt wird und die zum bestimmten Abstandswert zugeordneten Abweichungswerte aus dem Speicher gelesen werden und von einer Reglereinheit ein Stellwert für den Antrieb des Mobilteils derart bestimmt wird, dass die Abweichungswerte auf einen Sollwert hingeregelt werden. Von Vorteil ist dabei, dass mittels des Reglers das Mobilteil derart steuerbar ist, dass es auf eine mit dem Schienenfahrzeug mitbewegte Sollposition hin regelbar ist. Auf diese
Weise ist eine genügende Synchronisierung erreichbar, bei welcher eine Übergabe einer Last vom Mobilteil zu einem sich bewegenden Schienenfahrzeug ausführbar ist.

Bei einer vorteilhaften Ausgestaltung wird während des zweiten Schrittes eine vom Mobilteil aufgenommene Last an das Schienenfahrzeug übergeben
oder
während des zweiten Schrittes wird eine vom Schienenfahrzeug aufgenommene Last an das Mobilteil übergeben.

Von Vorteil ist in beiden Fällen dabei, dass eine höhere Effizienz erreichbar ist, da kein Abbremsen vor der Übergabe der Last notwendig ist, sondern eine Übergabe der Last während der Fahrt ausführbar ist.

Bei einer vorteilhaften Ausgestaltung ist in Schienenrichtung neben dem Messkörper am Schienenfahrzeug ein Lichtsensor angeordnet, mit welchem das Licht eines auf dem Mobilteil angeordneten Leuchtmittels detektierbar ist. Von Vorteil ist dabei, dass überwachbar ist, ob das Mobilteil noch im Synchronisierungsbereich ist oder diesen Bereich verlassen hat.

Bei einer vorteilhaften Ausgestaltung ist das Leuchtmittel in einem Rohr angeordnet, so dass das aus dem Rohr austretende Licht einen beleuchteten Bereich, insbesondere Lichtfleck, am Schienenfahrzeug erzeugt,
insbesondere wobei die Ausdehnung des Lichtfleckes in Schienenrichtung größer ist als die Ausdehnung des Messkörpers in Schienenrichtung. Von Vorteil ist dabei, dass in besonders einfacher Weise ein Lichtfleck erzeugbar ist, dessen Breite in Schienenrichtung etwas, insbesondere 10 Prozent, breiter als die Ausdehnung des Messkörpers in Schienenrichtung ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

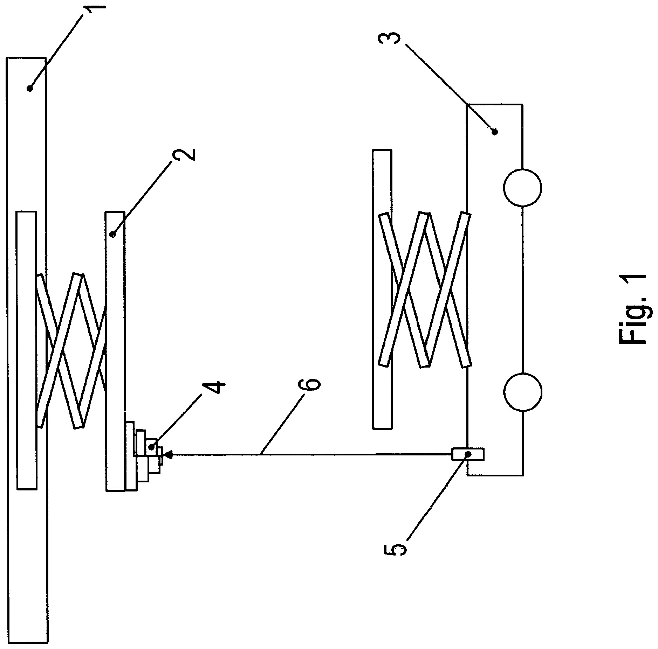

In der Figur 1 ist eine erfindungsgemäße Anlage schematisch skizziert, wobei ein Messkörper 4 an einem Schienenfahrzeug 2 angeordnet ist.
In der Figur 2 ist der Messkörper 4 in Schrägansicht dargestellt.
In der Figur 3 ist der Messkörper 4 in Seitenansicht aus einer ersten Blickrichtung dargestellt.
In der Figur 4 ist der Messkörper 4 in Seitenansicht aus einer zur ersten Blickrichtung senkrechten zweiten Blickrichtung dargestellt.

Wie in den Figuren dargestellt, weist die Anlage ein entlang einer Schiene 1 bewegbares Schienenfahrzeug 2 auf, an welchem ein Messkörper 4 befestigt ist.

Vorzugsweise ist die Schiene 1 oberhalb des Bodens der Anlage angeordnet, so dass der Messkörper 4 an der Unterseite des Schienenfahrzeugs 2 angeordnet ist.

Ein auf dem Boden der Anlage verfahrbares Mobilteil 3 ist somit in der Lage, das Schienenfahrzeug 2, insbesondere den Messkörper 4, zu unterfahren.

Um eine genaue Position zu erreichen, weist das Mobilteil 3 eine Messeinheit 5, insbesondere Laserentfernungsmessgerät, auf, welche einen Lichtstrahl 6 insbesondere vertikal aussendet und durch Auswertung des reflektierten Lichts die Entfernung zum Messkörper 4 bestimmt.

Nach Erreichen der Zielposition ist eine Last vom Schienenfahrzeug 2 an das Mobilteil 3 übergebbar.

Dabei ist auch eine Übergabe während der Fahrt ausführbar. Denn durch Bestimmung des Abstands des Messkörpers 4 ist auch die Abweichung von der Sollposition, insbesondere also vom Synchronpunkt, bestimmbar und mittels einer Positionsregelung die Position des Mobilteils 3 auf die Sollposition hinregelbar.

Bei Erreichen der Sollposition wird auch ein vorbekannter Abstand zwischen Messeinheit 5 und Messkörper 4 erreicht. Vorzugsweise ist dies auch für alle möglichen Verfahrpositionen des Mobilteils auf dem Boden der Anlage der kleinste Abstand zwischen dem Messkörper 4 und der Messeinheit 5.

Der Messkörper 4 ist vorzugsweise derart geformt, dass der Abstand zwischen Messkörper 4 und Messeinheit 5 eineindeutig zu Flächenbereichen der durch die möglichen Positionen der Messeinheit 5 aufgespannten Ebene ist. Außerdem wächst der Abstand mit zunehmendem Abstand zur Sollposition monoton an, insbesondere nicht aber streng monoton.

Somit ist nach Bestimmung des bei einer Messung von der Messeinheit 5 jeweils erfassten Abstandes auch die Richtung und der Abstand zur Sollposition bekannt, wobei die Genauigkeit von der Abstandsstufung der Flächenbereiche abhängt.

Hierzu ist der Messkörper 4 vorzugsweise gestuft ausgeführt.

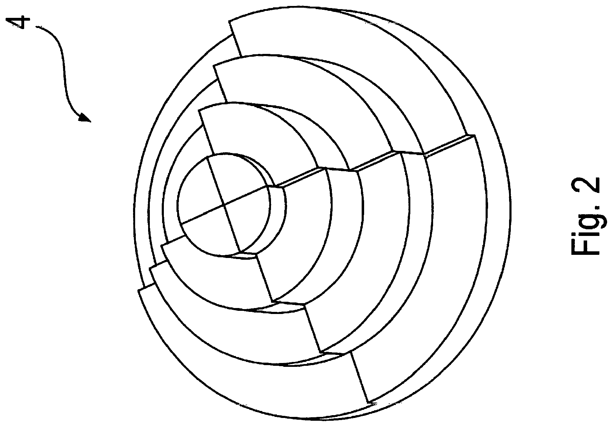

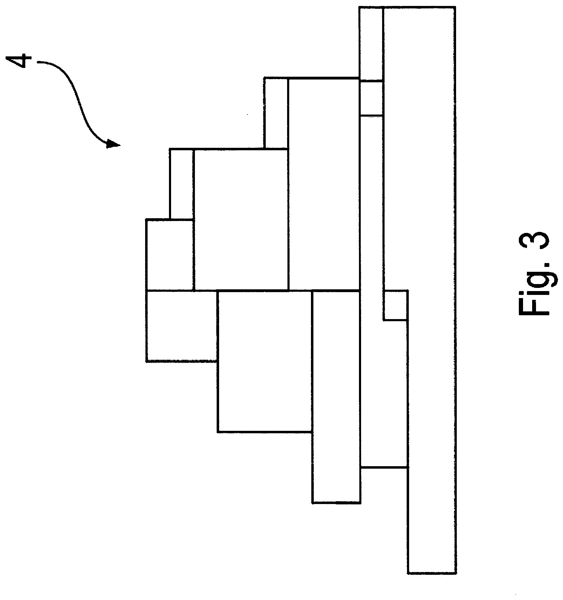

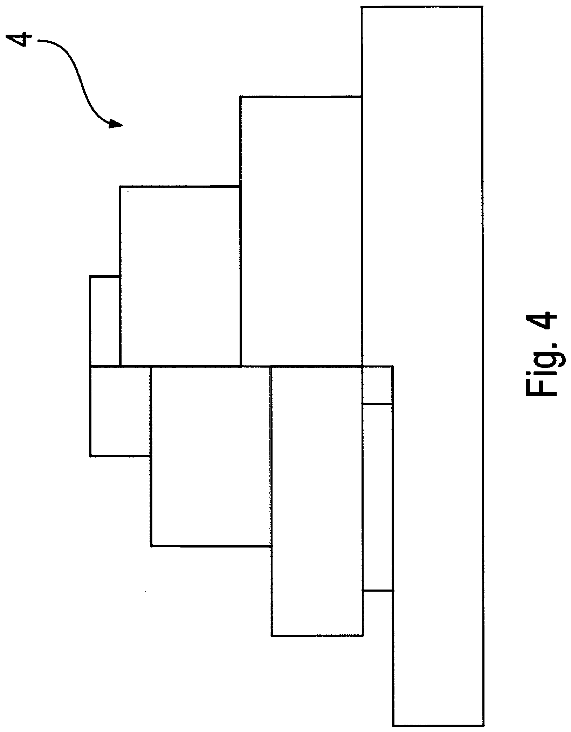

Wie in den Figuren 2, 3, und 4 näher gezeigt, weist der Messkörper 4 vier Umfangswinkelbereiche auf, wobei in jedem Umfangswinkelbereich mit zunehmendem Radialabstand von einem die Sollposition enthaltenden Flächenbereich der Abstand zur Messeinheit 5 monoton ansteigt, nicht aber streng monoton. Denn dieser Abstand zur Messeinheit 5 ist als Funktion des Radialabstands zur Sollposition eine treppenförmige Funktion.

Jedem Plateau der treppenförmigen Funktion ist eineindeutig ein Abstandswert zur Messeinheit 5 zugeordnet.

Dabei ist als Abstandswert immer die vertikale Höhendifferenz zwischen der Messeinheit 5 und dem Messkörper 4, insbesondere dem Plateau des Messkörpers 4, gemeint.

Die radiale Breite der von der Sollposition gesehen ersten Treppenstufe, also die radial Stufenbreite, ist in jedem der Umfangswinkelbereiche jeweils gleich. Gleiches gilt für die nächste Treppenstufe und so weiter.

Also ist die treppenförmige Funktion in jedem Umfangswinkel gleich, insbesondere also identisch.

Die radiale Breite jeder der Treppenstufen, also die radial Stufenbreite ist vorzugsweise jeweils gleich.

Der Lichtstrahl 6, insbesondere Laserstrahl, der Messeinheit 5 ist stets vertikal gerichtet, so dass stets nur ein Plateau des Messkörpers 4 vom Laserstrahl getroffen wird und somit vermessen wird.

In Schienenrichtung neben dem Messkörper 4 ist am Schienenfahrzeug 2 ein Lichtsensor angeordnet, mit welchem das Licht eines auf dem Mobilteil 3 angeordneten Leuchtmittels detektierbar ist. Das Leuchtmittel ist in einem Rohr angeordnet, so dass das aus dem Rohr austretende Licht einen Lichtfleck am Schienenfahrzeug erzeugt. Sobald der Lichtfleck den Lichtsensor nicht mehr enthält, wird ein Stop-Befehl für das Schienenfahrzeug 2 erzeugt.

Auf diese Weise wird überwacht, ob das Mobilteil 3 dem Schienenfahrzeug synchronisiert folgt oder ob es den Bereich der Synchronisierung verlassen hat.

Die Ausdehnung des Lichtfleckes in Schienenrichtung ist größer als die Ausdehnung des Messkörpers 4 in Schienenrichtung.

Bei weiteren erfindungsgemäßen Ausführungsbeispielen wird statt der vertikalen Richtung eine andere Richtung verwendet. Vorzugsweise ist diese Richtung aber parallel zur Normalenrichtung der ebenen Verfahrfläche des Mobilteils 3.

### Bezugszeichenliste

1 Schiene
2 Schienenfahrzeug
3 Mobilteil
4 Messkörper
5 Messeinheit, insbesondere Laserentfernungsmessgerät
6 Lichtstrahl

## Patentansprüche

1. Anlage mit auf einer Verfahrebene verfahrbarem Mobilteil (3), welches eine **als** Laserentfernungsmessgerät **ausgebildete** Messeinheit (5), **welche einen Lichtstrahl (6) aussendet und durch Auswertung des reflektierten Lichts die Entfernung zum Messkörper (4) bestimmt,** aufweist, und einem Messkörper (4), welcher beabstandet ist von der Verfahrebene und von der zur Verfahrebene parallelen Ebene, welche die Messeinheit (5) enthält insbesondere und möglichst weit entfernt von der Verfahrebene angeordnet ist, **wobei** die Messeinheit (5) derart ausgeführt ist, dass sie den Abstand zwischen Messkörper (4) und Messeinheit (5) in Normalenrichtung zur Verfahrebene bestimmt,
wobei der Messkörper (4) derart geformt ist, dass in der auf die Ebene senkrechten Projektion, insbesondere Projektionsfläche, des Messkörpers mehreren insbesondere nicht einander überlappenden Teilflächenbereichen der Projektionsfläche jeweils ein Abstandswert eineindeutig zugeordnet ist,
**dadurch gekennzeichnet, dass**
**das Mobilteil (3) einen Speicher aufweist, der geeignet ist, auf den Messkörper (4) bezogene Abstandswerte als Abweichungswerte einen Umfangswinkel und einen Radialabstand zuzuordnen,**
**wobei eine Reglereinheit geeignet ausgeführt ist, einen Stellwert für den Antrieb des Mobilteils (3) derart zu bestimmen, dass die** aus dem Speicher gelesenen und zum bestimmten Abstandswert zugeordneten **Abweichungswerte auf einen Sollwert hingeregelt werden.**

2. Anlage nach Anspruch 1,
**dadurch gekennzeichnet, dass**
der Messkörper (4) an einem Schienenfahrzeug (2) der Anlage angeordnet ist, welches auf einer Schiene (1) der Anlage verfahrbar ist,
insbesondere wobei das Schienenfahrzeug (2) ein Einschienenhängebahn-Fahrzeug ist.

3. Anlage nach einem der vorangegangenen Ansprüche,
**dadurch gekennzeichnet, dass**
die Messeinheit (5) einen Lichtstrahl (6) parallel zur Normalenrichtung zur Verfahrebene aussendet und aus am Messkörper (4) reflektierten Licht den Abstand zwischen der Messeinheit (5) und dem Messkörper (4) in Normalenrichtung bestimmt.

4. Anlage nach einem der vorangegangenen Ansprüche,
**dadurch gekennzeichnet, dass**
der Messkörper (4) derart geformt ist, dass der Abstand mit zunehmendem Radialabstand zu einer Sollposition oder zu einem ersten Teilflächenbereich der Projektionsfläche monoton zunimmt, insbesondere nicht aber streng monoton,
insbesondere wobei die radiale Richtung und die Umfangsrichtung bezogen sind auf die durch die Sollposition oder durch den ersten Teilflächenbereich durchgehende Gerade, welche parallel zur Normalenrichtüng zur Verfahrebene ist.

5. Anlage nach einem der vorangegangenen Ansprüche,
**dadurch gekennzeichnet, dass**
der Abstand als Funktion des Radialabstandes und der Umfangsrichtung ein lokales oder absolutes Minimum bei der Sollposition oder bei dem ersten Teilflächenbereich aufweist.

6. Anlage nach einem der vorangegangenen Ansprüche,
**dadurch gekennzeichnet, dass**
der Messkörper (4) derart geformt ist, dass in einem jeweiligen Umfangswinkelbereich der Abstand mit zunehmendem Radialabstand zu einer Sollposition oder zu einem ersten Teilflächenbereich der Projektionsfläche gemäß einer jeweiligen Treppenfunktion monoton zunimmt, insbesondere nicht aber streng monoton,
insbesondere wobei die radiale Richtung und die Umfangsrichtung bezogen sind auf die durch die Sollposition oder durch den ersten Teilflächenbereich durchgehende Gerade, welche parallel zur Normalenrichtung zur Verfahrebene ist.

7. Anlage nach einem der vorangegangenen Ansprüche,
**dadurch gekennzeichnet, dass**
die Treppenfunktion eines jeweiligen Umfangswinkelbereichs unterschiedlich ist zu allen anderen Treppenfunktionen der jeweils anderen Umfangswinkelbereiche,
insbesondere alle Werte der Treppenfunktion eines jeweiligen Umfangswinkelbereichs unterschiedlich sind zu allen Werten aller anderen Treppenfunktionen der jeweils anderen Umfangswinkelbereiche.

8. Anlage nach einem der vorangegangenen Ansprüche wenn abhängig vom Anspruch 2,
**dadurch gekennzeichnet, dass**
die radiale Breite der Treppen der Treppenfunktionen aller Umfangswinkelbereiche gleich ist,
und/oder dass
in Schienenrichtung neben dem Messkörper (4) am Schienenfahrzeug (2) ein Lichtsensor angeordnet ist, mit welchem das Licht eines auf dem Mobilteil (3) angeordneten Leuchtmittels detektierbar ist.

9. Anlage nach dem vorangehenden Anspruch,
**dadurch gekennzeichnet, dass**
das Leuchtmittel in einem Rohr angeordnet, so dass das aus dem Rohr austretende Licht einen beleuchteten Bereich, insbesondere Lichtfleck, am Schienenfahrzeug (2) erzeugt, insbesondere wobei die Ausdehnung des Lichtfleckes in Schienenrichtung größer ist als die Ausdehnung des Messkörpers in Schienenrichtung.

10. Verfahren zum Betreiben einer Anlage nach einem der vorangegangenen Ansprüche, **dadurch gekennzeichnet, dass**
in einem ersten Schritt, insbesondere bei Inbetriebnahme der Anlage, in einem Speicher des Mobilteils (3) auf den Messkörper (4) bezogenen Abstandswerten als Abweichungswerte ein Umfangswinkel und ein Radialabstand zugeordnet werden,
in einem zweiten Schritt, insbesondere im auf die Inbetriebnahme nachfolgenden Betrieb der Anlage, zeitlich wiederkehrend der Abstand zwischen der Messeinheit (5) und dem Messkörper (4) bestimmt wird und die zum bestimmten Abstandswert zugeordneten Abweichungswerte aus dem Speicher gelesen werden und von einer Reglereinheit ein Stellwert für den Antrieb des Mobilteils (3) derart bestimmt wird, dass die Abweichungswerte auf einen Sollwert hingeregelt werden.

11. Verfahren nach dem Anspruch 10,
**dadurch gekennzeichnet, dass** der Messkörper (4) an einem Schienenfahrzeug (2) der Anlage angeordnet ist, welches auf einer Schiene (1) der Anlage verfahrbar ist, und
während des zweiten Schrittes eine vom Mobilteil (3) aufgenommene Last an das Schienenfahrzeug (2) übergeben wird
oder
während des zweiten Schrittes eine vom Schienenfahrzeug (2) aufgenommene Last an das Mobilteil (3) übergeben wird.

12. Verfahren nach dem vorangehenden Anspruch,
**dadurch gekennzeichnet, dass**
ein Stop-Befehl für das Schienenfahrzeug (2) erzeugt wird, wenn der Lichtsensor den beleuchteten Bereich nicht mehr detektiert,
insbesondere so, dass überwacht wird, ob das Mobilteil (3) dem Schienenfahrzeug (2) synchronisiert folgt oder ob es den Bereich der Synchronisierung verlassen hat.

## Claims

1. Facility comprising a movable part (3) which is movable on a movement plane and which has a measuring unit (5) in the form of a laser distance measuring device that emits a light beam (6) and determines the distance to the measurement body (4) by evaluating the reflected light, and comprising a measurement body (4) which is located at a distance from the movement plane and from the plane situated parallel to the movement plane and containing the measuring unit (5), and which in particular is arranged as far from the movement plane as possible,
wherein the measuring unit (5) is designed such that it determines the distance between the measurement body (4) and the measuring unit (5) in a direction normal to the movement plane, wherein the measurement body (4) is shaped such that, in the projection, in particular projection area, of the measurement body perpendicular to the plane, a distance value is bijectively associated with each of a plurality of in particular nonoverlapping partial surface regions of the projection area, **characterized in that**
the movable part (3) has a memory which is suitable for associating a circumferential angle and a radial distance with distance values relating to the measurement body (4), as deviation values,
wherein a controller is designed to be suitable for determining a set value for the drive of the movable part (3) such that the deviation values read from the memory and associated with the determined distance value are adjusted to a setpoint value.

2. Facility according to claim 1,
**characterized in that**
the measurement body (4) is arranged on a rail vehicle (2) of the facility, which is movable on a rail (1) of the facility, in particular wherein the rail vehicle (2) is a monorail suspension vehicle.

3. Facility according to any one of the preceding claims, **characterized in that**
the measuring unit (5) emits a light beam (6) parallel to the direction normal to the movement plane and determines the distance between the measuring unit (5) and the measurement body (4) in the normal direction from light reflected at the measurement body (4).

4. Facility according to any one of the preceding claims, **characterized in that**
the measurement body (4) is shaped such that the distance increases monotonically, but in particular not strictly monotonically, as the radial distance to a setpoint position or to a first partial surface region of the projection area increases,
in particular wherein the radial direction and the circumferential direction relate to the straight line which passes through the setpoint position or through the first partial surface region and which is parallel to the direction normal to the movement plane.

5. Facility according to any one of the preceding claims, **characterized in that**
the distance as a function of the radial distance and the circumferential direction has a local or absolute minimum in the setpoint position or in the first partial surface region.

6. Facility according to any one of the preceding claims, **characterized in that**
the measurement body (4) is shaped such that, in a respective circumferential angle region, the distance increases monotonically, but in particular not strictly monotonically, as the radial distance to a setpoint position or to a first partial surface region of the projection area increases, in accordance with a respective step function,
in particular wherein the radial direction and the circumferential direction relate to the straight line which passes through the setpoint position or through the first partial surface region and which is parallel to the direction normal to the movement plane.

7. Facility according to any one of the preceding claims, **characterized in that**
the step function of one respective circumferential angle region is different from all other step functions of the respective other circumferential angle regions,
in particular all values of the step function of one respective circumferential angle region are different from all values of all other step functions of the respective other circumferential angle regions.

8. Facility according to any one of the preceding claims when dependent on claim 2,
**characterized in that**
the radial width of the steps of the step functions of all circumferential angle regions is equal,
and/or **in that**
arranged next to the measurement body (4) on the rail vehicle (2), in the direction of the rail, is a light sensor by which the light from an illumination means arranged on the movable part (3) can be detected.

9. Facility according to the preceding claim,
**characterized in that**
the illumination means is arranged in a tube so that the light emerging from the tube produces an illuminated region, in particular a light spot, on the rail vehicle (2),
in particular wherein the size of the light spot in the rail direction is greater than the size of the measurement body in the rail direction.

10. Method for operating a facility according to any one of the preceding claims,
**characterized in that**
in a first step, in particular during commissioning of the facility, a circumferential angle and a radial distance are associated in a memory of the movable part (3) with distance values relating to the measurement body (4), as deviation values,
in a second step, in particular during operation of the facility following commissioning, the distance between the measuring unit (5) and the measurement body (4) is determined in a temporally recurring manner and the deviation values associated with the determined distance value are read from the memory, and a set value for the drive of the movable part (3) is determined by a controller such that the deviation values are adjusted to a setpoint value.

11. Method according to claim 10,
**characterized in that**
the measurement body (4) is arranged on a rail vehicle (2) of the facility, which is movable on a rail (1) of the facility, and
a load carried by the movable part (3) is transferred to the rail vehicle (2) during the second step,
or
a load carried by the rail vehicle (2) is transferred to the movable part (3) during the second step.

12. Method according to the preceding claim,
**characterized in that**
a stop command for the rail vehicle (2) is generated when the light sensor no longer detects the illuminated region,
in particular such that it is monitored whether the movable part (3) is following the rail vehicle (2) in a synchronized manner or whether it has left the synchronization range.

## Revendications

1. Installation comprenant une partie (3) apte à se déplacer sur un plan de déplacement et pourvue d'une unité de mesure (5) qui est réalisée en tant que télémètre laser, émet un rayonnement lumineux (6) et détermine l'éloignement par rapport au corps de mesure (4), par évaluation de la lumière réfléchie ; et un corps de mesure (4) qui est disposé à distance du plan de déplacement et du plan parallèle audit plan de déplacement et renfermant notamment l'unité de mesure (5), et est implanté le plus loin possible dudit plan de déplacement,
laquelle unité de mesure (5) est conçue de manière qu'elle détermine l'espacement, entre le corps de mesure (4) et ladite unité de mesure (5), dans une direction normale au plan de déplacement,
lequel corps de mesure (4) est conformé de façon telle que, dans la projection perpendiculaire au plan, en particulier la surface de projection dudit corps de mesure, une valeur d'espacement soit respectivement attribuée, de manière univoque, à plusieurs zones superficielles partielles de ladite surface de projection qui, en particulier, ne sont pas en chevauchement mutuel,
**caractérisée par le fait que**
la partie mobile (3) est dotée d'une mémoire propre à attribuer, en tant que valeurs d'écart, un angle périphérique et une distance radiale à des valeurs d'espacement se rapportant au corps de mesure (4),
une unité de régulation étant conçue avec aptitude à déterminer une valeur de réglage dévolue à l'entraînement de ladite partie mobile (3), de façon telle que les valeurs d'écart, lues à partir de ladite mémoire et attribuées à la valeur d'espacement déterminée, soient régulées en ciblant une valeur de consigne.

2. Installation selon la revendication 1,
**caractérisée par le fait que**
le corps de mesure (4) est implanté sur un véhicule ferroviaire (2) de ladite installation, apte à se déplacer sur un rail (1) de ladite installation,
sachant, en particulier, que ledit véhicule ferroviaire (2) est un véhicule à monorail suspendu.

3. Installation selon l'une des revendications précédentes,
**caractérisée par le fait que**
l'unité de mesure (5) émet un rayonnement lumineux (6) parallèlement à la direction normale au plan de déplacement, et détermine l'espacement entre ladite unité de mesure (5) et le corps de mesure (4), dans ladite direction normale, à partir de la lumière réfléchie sur ledit corps de mesure (4).

4. Installation selon l'une des revendications précédentes,
**caractérisée par le fait que**
le corps de mesure (4) est conformé de façon telle que l'espacement croisse de manière monotone, mais notamment pas de manière strictement monotone, au fur et à mesure de l'accroissement de la distance radiale vis-à-vis d'un emplacement de consigne ou vis-à-vis d'une première zone superficielle partielle de la surface de projection,
sachant, en particulier, que la direction radiale et la direction périphérique sont rapportées à la droite qui franchit ledit emplacement de consigne ou ladite première zone superficielle partielle, et est parallèle à la direction normale au plan de déplacement.

5. Installation selon l'une des revendications précédentes,
**caractérisée par le fait que**
l'espacement présente, en fonction de la distance radiale et de la direction périphérique, un minimum localisé ou absolu à l'emplacement de consigne ou dans la première zone superficielle partielle.

6. Installation selon l'une des revendications précédentes,
**caractérisée par le fait que**
le corps de mesure (4) est conformé de façon telle que, dans une plage considérée d'angles périphériques, l'espacement croisse de manière monotone, mais notamment pas de manière strictement monotone, au fur et à mesure de l'accroissement de la distance radiale vis-à-vis d'un emplacement de consigne ou vis-à-vis d'une première zone superficielle partielle de la surface de projection, en conformité avec une fonction respective en escalier,
sachant, en particulier, que la direction radiale et la direction périphérique sont rapportées à la droite qui franchit ledit emplacement de consigne ou ladite première zone superficielle partielle, et est parallèle à la direction normale au plan de déplacement.

7. Installation selon l'une des revendications précédentes,
**caractérisée par le fait que**
la fonction en escalier d'une plage considérée d'angles périphériques est différente de toutes les autres fonctions en escalier des plages d'angles périphériques respectivement autres,
toutes les valeurs de la fonction en escalier d'une plage considérée d'angles périphériques étant, en particulier, différentes de toutes les valeurs de toutes les autres fonctions en escalier desdits plages d'angles périphériques respectivement autres.

8. Installation selon l'une des revendications précédentes dépendant de la revendication 2,
**caractérisée par le fait que**
la largeur radiale des gradins des fonctions en étage de toutes les plages d'angles périphériques est identique ;
et/ou **par le fait**
**qu'**un capteur de lumière, par lequel la lumière d'un moyen d'éclairage disposé sur la partie mobile (3) peut être détectée, est implanté sur le véhicule ferroviaire (2) dans la direction du rail, à côté du corps de mesure (4).

9. Installation selon la revendication précédente,
**caractérisée par le fait que**
le moyen d'éclairage est logé dans un tube, de sorte que la lumière sortant dudit tube produit une région éclairée, notamment une tache lumineuse sur le véhicule ferroviaire (2),
l'étendue de ladite tache lumineuse, dans la direction du rail, étant alors supérieure à l'étendue du corps de mesure dans ladite direction du rail

10. Procédé d'actionnement d'une installation conforme à l'une des revendications précédentes,
**caractérisé par le fait que**,
lors d'une première étape, en particulier lors de la mise en route de l'installation, un angle périphérique et une distance radiale sont attribués en tant que valeurs d'écart, dans une mémoire de la partie mobile (3), à des valeurs d'espacement se rapportant au corps de mesure (4),
lors d'une seconde étape, notamment au cours du fonctionnement succédant à ladite mise en route, l'espacement entre l'unité de mesure (5) et ledit corps de mesure (4) est déterminé avec réitération dans le temps ; les valeurs d'écart, attribuées à la valeur d'espacement déterminée, sont lues à partir de ladite mémoire ; et une valeur de réglage dévolue à l'entraînement de ladite partie mobile (3) est déterminée, par une unité de régulation, de telle sorte que lesdites valeurs d'écart soient régulées en ciblant une valeur de consigne.

11. Procédé selon la revendication 10,
**caractérisé par le fait que**
le corps de mesure (4) est implanté sur un véhicule ferroviaire (2) de l'installation, apte à se déplacer sur un rail (1) de ladite installation, et
au cours de la seconde étape, une charge absorbée par la partie mobile (3) est transférée audit véhicule ferroviaire (2),
ou bien,
au cours de ladite seconde étape, une charge absorbée par ledit véhicule ferroviaire (2) est transférée à ladite partie mobile (3).

12. Procédé selon la revendication précédente,
**caractérisé par le fait**
**qu'**une commande d'arrêt, destinée au véhicule ferroviaire (2), est engendrée lorsque le capteur de lumière ne détecte plus la région éclairée,
notamment de façon telle qu'il s'opère une surveillance établissant si la partie mobile (3) suit ledit véhicule ferroviaire (2) en mode synchronisé, ou si elle a quitté la plage de synchronisation.
